# EUROPÄISCHE PATENTSCHRIFT

(11) **EP 0 941 187 B1**
(45) Veröffentlichungstag und Bekanntmachung des Hinweises auf die Patenterteilung: **21.07.2004**
(21) Anmeldenummer: 97952762.9
(22) Anmeldetag: 13.11.1997
(51) Int. Cl.: B60T 8/36, F16K 31/06, H01F 7/13, G05D 16/20

(54) **MEHRWEGEVENTIL**
MULTIWAY VALVE
DISTRIBUTEUR MULTIVOIE

(30) Priorität: 06.12.1996 DE 19650591; 27.10.1997 DE 19747307
(43) Veröffentlichungstag der Anmeldung: 15.09.1999
(73) Patentinhaber: Continental Teves AG & Co. oHG, 60488 Frankfurt (DE)
(72) Erfinder: KLEIN, Andreas, D-61350 Bad Homburg (DE); FEIGEL, Hans-Jörg, D-61191 Rosbach (DE)
(74) Vertreter: Blum, Klaus-Dieter
(86) Internationale Anmeldenummer: PCT/EP1997/006339
(87) Internationale Veröffentlichungsnummer: WO 1998/024669

(56) Entgegenhaltungen:
- EP-A- 0 369 412
- EP-A- 0 645 291
- WO-A-92/05992
- DE-A- 4 237 087
- DE-A- 4 441 150
- US-A- 3 665 353
- US-A- 5 186 093
- US-A- 5 191 827
- US-A- 5 226 701
- US-A- 5 248 191
- US-A- 5 410 943

## Beschreibung

Die Erfindung betrifft ein Mehrwegeventil für hydraulische Kraftfahrzeugbremsanlagen mit Radschlupfregelung und/oder automatischem Bremseneingriff nach dem Oberbegriff des Patentanspruchs 1.

Aus der DE 44 41 150 A1 ist bereits ein Mehrwegeventil bekannt geworden, mit einem in einem Ventilgehäuse axial beweglich angeordneten Ventilsitzkörper sowie mit einem relativ zum Ventilsitzkörper im Ventilgehäuse beweglichen Ventilschieber, wobei der Ventilschieber einen oder mehrere Druckmittelverbraucher wahlweise mit einer Druckmittelquelle oder mit einem Druckmittelsammler verbindet. Dadurch, daß der Ventilschieber als Stromwegeventil ausgelegt ist, ist er prinzipbedingt nicht druckausgeglichen und baut darüber hinaus aufwendig.

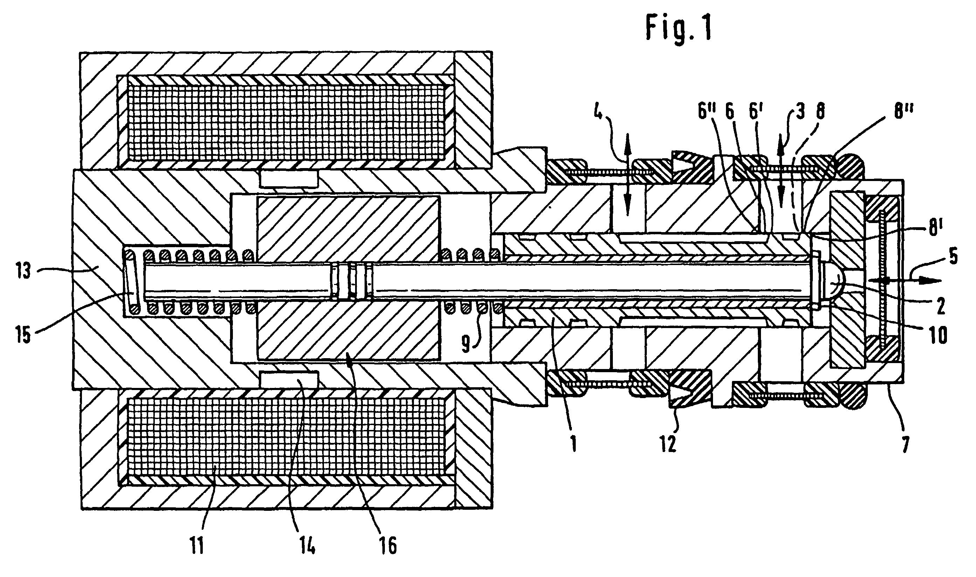

In der US-A-5,248,191 weist das Mehrwegeventil nach Figur 1 zur Druckmittelsteuerung in einer Bremsanlage einen unmittelbar an einem Magnetantrieb befestigten Ventilschieber auf, an dessen vom Magnetantrieb abgewandten Endbereich ein mit einem federbelasteten Sitzventilkörper zusammenwirkender Stößel anliegt, der eine mechanische Kopplung zwischen dem Ventilschieber und dem Sitzventilkörper herstellt. Dies führt zu einer Aneinanderreihung vorgenannter Bauteile mit entsprechender Ventilbaulänge und langem Strömungsweg in Richtung des Sitzventilkörpers. Die Aktivierung des Magnetantriebs richtet sich nach dem jeweiligen Druckregelzyklus und dem am Ventilschieber gerade wirksamen Radbremsdruck.

Aus der gattungsbildenden EP-A-645 291 ist ein Mehrwegeventil bekannt, mit einem in einem Ventilgehäuse axial beweglich angeordneten Sitzventilkörper sowie mit einem im Ventilgehäuse beweglichen Ventilschieber, der mit dem Sitzventilkörper mechanisch gekoppelt ist. Zwischen dem Ventilgehäuse und dem Ventilschieber befindet sich eine erste Druckfeder, die den Ventilschieber permanent gegen einen ersten Anschlag drückt, der an einem den Ventilschieber durchdringenden Stößel angebracht ist. Entfernt zum ersten Anschlag befindet sich an einem in den Sitzventilkörper gerichteten Ende des Stößels ein weiterer Anschlag, an dem der Sitzventilkörper unter der Wirkung einer weiteren Druckfeder, die sich gleichfalls am Ventilgehäuse abstützt, anliegt.

Aufgabe der Erfindung ist es, ein Mehrwegeventil der eingangs genannten Art derart zu gestalten, daß mit möglichst geringem baulichen und funktionellen Aufwand ein reaktionsschnelles, den Strömungsquerschnitt bei Bedarf variabel einstellendes und das Druckmittelvolumen fein dosierendes Mehrwegeventil geschaffen wird.

Diese Aufgabe wird erfindungsgemäß für ein Mehrwegeventil der gattungsbildenden Art mittels den kennzeichnenden Merkmalen des Patentanspruchs 1 gelöst.

Weitere Merkmale, Vorteile und Anwendungsmöglichkeiten der Erfindung gehen im nachfolgenden aus den Unteransprüchen als auch aus einer Beschreibung eines Ausführungsbeispiels hervor.

Die einzige Fig. 1 zeigt in schematischer Darstellung ein Mehrwegeventil, das insbesondere für den Einsatz für hydraulische Kraftfahrzeugbremsanlagen mit Radschlupfregelung und/oder automatischem Bremseneingriff geeignet ist. Das Mehrwegeventil weist in einem Ventilgehäuse 7 einen axial beweglich angeordneten Sitzventilkörper 2 auf sowie einen relativ zum Ventilsitzkörper 2 im Ventilgehäuse 7 beweglichen Ventilschieber. Das Ventilgehäuse 7 ist vorzugsweise als Hülsenteil ausgeführt, in dem gleichfalls der Ventilschieber 1 als Hohlschieber geführt ist. Der Sitzventilkörper 2 weist einen Kugelsitz auf und ist einstückiges Bestandteil eines den Ventilschieber 1 koaxial durchdringenden Stößels, an dessen vom Sitzventilkörper 2 abgewandten Ende ein Proportionalmagnet 11 angeordnet ist. Das Gegenstück des Sitzventilkörpers 2 bildet eine Ventilplatte, die am Endabschnitt des Ventilgehäuses 7 befestigt ist und der in Richtung eines Druckmittelsammlers 5 ein Plattenfilter folgt. Infolge einer zwischen einem Magnetanker und dem Gehäuse (Hülse 13) des Proportionalmagneten 11 eingespannten Druckfeder (Feder 15) verharrt der Sitzventilkörper 2 in der elektromagnetisch nicht erregten Grundstellung in Schließstellung am Plattenventil, so daß infolge der erfindungsgemäß mechanischen Koppelung des Sitzventilkörpers 2 mit dem Ventilschieber 1 in der abbildungsgemäßen Grundstellung des Ventils eine ungehinderte Druckmittelverbindung des Druckmittelverbrauchers 3 mit der Druckmittelquelle 4 über einen entsprechend langen Ausschnitt in Form einer Ringnut am Umfang des Ventilschiebers 1 zustandekommt. Hierzu münden die Druckmittelverbindungen der Druckmittelquelle 4 und des Druckmittelverbrauches 3 als Radialbohrungen in das Ventilgehäuse 7 ein, die am Umfang des hülsenförmigen Ventilgehäuses 7 mit Ringfilter versehen sind. In der abbildungsgemäßen Grundstellung des Ventilschiebers 1 besteht hierbei durch eine erste Steuerkante 6' am Ventilschieber 1 und durch eine benachbarte, erste Steuerkante 6" im Ventilgehäuse 7 ein erster, in Abhängigkeit der Hubbewegung des Ventilschiebers 1 variabler Drosselquerschnitt 6. Dieser Drosselquerschnitt 6 ist im Bereich der zum Druckmittelverbraucher 3 führenden Radialbohrung gelegen, die in Nähe des zum Druckmittelsammler 5 führenden, vom Sitzventilkörper 2 verschlossenen Druckmittelkanals gelegen ist. Die zur Druckmittelquelle 4 führende Radialbohrung befindet sich somit entfernt von den zum Druckmittelverbraucher 3 und zum Druckmittelsammler 5 führenden Druckmittelanschlüssen in Nähe des mit dem Proportionalmagneten 11 verbundenen Abschnitts des Ventilgehäuses 7. Ein in der gezeigten Abbildung verschlossener zweiter Drosselquerschnitt 8, der zum Zwecke einer hydraulischen Verbindung zwischen dem Druckmittelverbraucher 3 und dem Druckmittelsammler 5 vorgesehen ist, wird geöffnet, nachdem zuvor sich der Ventilschieber 1 vom Plattensitzventil bzw. vom Ventilsitzkörper entfernt hat, wobei die Größe des Drosselquerschnitts wiederum durch eine am ventilschieber 1 wirksame Steuerkante 8' und einer weiteren Steuerkante 8" am Ventilgehäuse 7 bestimmt wird. Die Abdichtung des Ventilschiebers 1 im Ventilgehäuse 7 geschieht abhängig vom Radialspiel des Ventilschiebers 1 im Ventilgehäuse 7 durch eine Spaltdichtwirkung im vorliegenden Ausführungsbeispiel. Die abbildungsgemäße Grundstellung des Ventilschiebers 1 an einem ringförmigen Anschlag 10 am Sitzventilkörper 2 kommt durch die Wirkung der Feder 15 und eines zwischen dem Magnetanker und dem Ventilschieber 1 eingespannten Federelements 9 zustande. Durch die erfindungsgemäße mechanische Koppelung des Ventilschiebers 1 mit dem Sitzventilkörper 2 am Anschlag 10 entsteht zwangsläufig infolge der eingangs erwähnten Anordnung der Druckmittelanschlüsse zur Druckmittelquelle 4, dem Druckmittelverbraucher 3 und dem Druckmittelsammler 5 eine Reihenschaltung des Sitzventilkörpers 2 zwischen dem Druckmittelsammler 5 und dem Druckmittelverbraucher 3 über den zweiten Drosselquerschnitt 8 in der hydraulischen Verbindung.

Das abbildungsgemäße Mehrwegeventil bildet somit ein beispielsweise mittels Proportionalmagneten stetig ansteuerbares und mit einem Sitzventil gekoppeltes Schieberventil, das zweckmäßigerweise für schlupfgeregelte elektrohydraulische Bremssysteme verwendet werden kann, wobei der Ventilschieber 1 eine oder mehrere als Druckmittelverbraucher 3 wirksame Radbremsen wahlweise mit einem als Druckmittelquelle 4 wirksamen Bremsdruckgeber bzw. einer Hilfsdruckversorgung oder mit einem als Druckmittelsammler 5 wirksamen Niederdruckspeicher bzw. Niederdruckbehälter hydraulisch verbinden kann. Der vorzugsweise als Hohlschieber ausgebildete Ventilschieber 1 ist in der Druckmittelregelstellung völlig druckausgeglichen und damit im Hinblick auf eine möglichst gute Dosierbarkeit des Druckmittelvolumens bestens geeignet. Die Position des Ventilschiebers 1 läßt sich vorteilhaft mittels eines elektromechanischen Antriebs variabel einstellen, wobei bei Bedarf die Position des Ventilschiebers 1 elektronisch sensiert und mittels elektronischem Regler geregelt werden kann. Das vorgeschlagene Mehrwegeventil zeichnet sich überdies vorteilhaft durch die recht kurze hydraulische Verbindung zwischen dem zweiten Drosselquerschnitt 8 und dem Sitzventil aus und erfordert keine Durchströmung des druckausgeglichenen Ventilschiebers 1. Alternativ zur Ausführung des Dichtsitzes als Kugelsitz kann selbverständlich auch ein Kegelsitz dienen. Bei Wunsch oder Bedarf kann zweckmäßigerweise auch die Spaltabdichtung des Ventilschiebers 1 im Ventilgehäuse 7 durch eine Berührungsdichtung ersetzt werden. Der stößelförmige Fortsatz am Sitzventilkörper 2 bildet gleichzeitig einen Dichtkörper, der mittels Form/Reibschluß mit dem Magnetanker verbunden ist. Ferner ist am Außenumfang des Ventilgehäuses 7 zwischen den beiden abgefilterten Anschlüssen der Druckmittelquelle 4 und dem Druckmittelverbraucher 3 eine Rückschlagmanschette 12 vorgesehen, die bei Verwendung des Mehrwegeventils für eine Bremsanlage unabhängig von der Stellung des Ventilschiebers 1 eine hydraulische Verbindung zwischen der Radbremse und dem Bremsdruckgeber herstellt. Um möglichst eine Kennlinienlinearisierung des Magnetantriebs zu erreichen, weist die als einteilige Hülse 13 des mit dem Ventilgehäuse 7 verbundenen Proportionalmagneten 11 am Außenumfang eine Ringnut 14 auf, die den magnetischen Kurzschluß reduziert. Die einteilige Magnethülse 13 weist im Bereich der Verbindungsstelle mit dem Ventilgehäuse 7 einen Bund auf, der zweckmäßigerweise zur Befestigung des Mehrwegeventils in einem Ventilträgergehäuse verwendet wird.

Im Gegensatz zu der Abbildung nach Fig. 1 handelt es sich bei dem vorgestellten Mehrwegeventil um ein besonders kleinbauendes, nur wenige Millimeter abmessendes Element, da auch durch die relativ kleinen notwendigen Ansteuerströme der Magnetantrieb sehr klein bauen kann. Dies ist dadurch möglich, daß der Ventilschieber 1 ein druckausgeglichenes, in Grundstellung stromlos geöffnetes Ventilteil bildet, das entsprechend der vorangeschilderten konstruktiven Ausführung mit einem in Grundstellung geschlossenen Ventilteil (Sitzventilkörper 2) zusammengefaßt ist.

Bei dem beschriebenen Mehrwegeventil wird die Regelposition des Ventilschiebers 1 maßgeblich von der Federkraft der Feder 15 und der Magnetkraft des Elektromagneten (Magnetantrieb 16) beeinflußt. Bekanntlich nimmt bei einem solchen Magnetantrieb 16 die Magnetkraft überproportional mit der Verkleinerung des Magnetanker-Luftspalts zu. Um eine Analogfunktion des Magnetantriebs 16 zu gewährleisten, ist der aus dem Magnetanker, der Stromspule und dem magnetisch durchflossene Magnetkern (Hülse 13) gebildete Magnetantrieb 16 proportionalisiert, das bedeutet, daß die magnetischen Flußlinien derart umgelenkt werden, daß jeweils für einen gewählten elektrischen Strom des Magnetantriebs 16 ein proportionaler Zusammenhang zwischen dem Magnetanker-Luftspalt und der Magnetkraft besteht. Um bei Bedarf eine erhöhte Magnetkraft des Elektromagneten realisieren zu können, muß der Magnetantrieb 16 in seiner Größe entsprechend angepaßt werden. Einer derartigen Magnetkrafterhöhung bedarf es schon, wenn Querkräfte auftreten, die zu einem unerwünschten Anstieg der Reibkräfte an den bewegten Ventilteilen im Ventilgehäuse 7 und in der Hülse 13 führen. Um im Betrieb des Proportionalmagneten 11 den elektrischen Energiebedarf und die oben beschriebene Umlenkung der magnetischen Flußlinien möglichst klein zu halten, wird deshalb vorgeschlagen, die Feder 15 nicht wie in der symbolisch als Schraubenfeder gewählten Darstellung linear auszulegen, sondern eine Feder 15 mit progressiver Kraft-/Weg-Kennlinie zu verwenden. Dadurch nimmt die Federkraft mit kleiner werdendem Magnetanker-Luftspalt überproportional zu, womit der Magnetantrieb 16 nicht mehr so stark proportionalisiert werden muß. Dieser Magnetantrieb 16 erhält anstelle eines linearen Kennlinienverlaufs eine entsprechende progressive Kennlinie. Die Vorteile liegen folglich in der besseren Ausnutzung des Bauraums, des elektrischen Stroms und der Vermeidung von Querkräften, die der Positionierungsgenauigkeit des Ventilschiebers 1 zugute kommt.

Das vorgeschlagene Mehrwegeventil eignet sich besonders gut zum Einsatz für schlupfgeregelte Bremsanlagen, da infolge des variabel mittels des Ventilschiebers 1 einstellbaren Strömungsquerschnittes einerseits ein schnelles Anbremsen, andererseits eine feine Dosierung des Druckmittelvolumens in der Radschlupfregelung erreicht wird. Dies erfolgt vorteilhafterweise durch eine Kombination aus Pulsweiten- und Pulsamplitudenmodulation, d.h. unterschiedlich große Ventilöffnungen sind einstellbar, was grundsätzlich durch einen Kraftabgleich der Magnetkraft mit der Federkraft erfolgen kann. Im Hinblick auf eine möglichst ausgeprägte Miniaturisierung des Mehrwegeventils wird jedoch ein sogenannter Positionsregelkreis für den Ventilschieber 1 vorgeschlagen, wodurch unerwünschte Reibkräfte erfaßt und damit ausgeregelt werden können und der jeweilige Betriebszustand des Mehrwegeventils erkannt werden kann. Ferner ermöglicht die Verwendung eines Positionsregelkreises die Geschwindigkeit zur Änderung des Ventilöffnungsquerschnitts gezielt vorzugeben, um durch Druckgradientenänderungen verursachte Ventilgeräusche zu unterbinden.

Durch die erfindungsgemäße mechanische Koppelung der Einlaß- und Auslaßventilfunktion ergibt sich vorteilhafterweise eine feine Volumendosierung des Druckmittelstromes als auch ein verbessertes Übergangsverhalten, das durch die Wahl der Steuerkantenüberdeckungen beeinflußt wird. Bei Wahl von progressiven Ventilöffnungsquerschnitten läßt sich das Ventilregelverhalten erheblich verbessern, da die Öffnungsquerschnitte wie Feinsteuerkerben wirken.

Zusammenfassend sind somit für das vorgeschlagene Mehrwegeventil folgende Gesichtspunkte von großem Vorteil:
1. Sichere Dichtfunktion durch Kugelsitzventil.
2. Sehr gute Regelbarkeit des Volumenstroms mittels mechanisch gekoppelter Einlaß- und Auslaßsteuerkanten.
3. Reduzierung der elektrischen Energie und damit Verringerung der erforderlichen Magnetkraft infolge Verwendung eines druckausgeglichenen Ventilschiebers.
4. Keine Zuschwemmgefahr des Ventilschiebers infolge nur kurzzeitig an den Steuerkanten entstehender Druckdifferenz.
5. Störkraftfreie Druckänderung im Ventil möglich.
6. Keine Querkräfte am Ventilschieber wirksam.
7. Keine Hauptströmung durch den Ventilschieber.
8. Einfache Herstellbarkeit der Steuerkanten.
9. Einfache und wenige Teile.
10. Proportionaler Kraft-Hub-Kennlinienverlauf des Magneten.
11. Geräuscharme Volumendosierung des Druckmittels.

### Bezugszeichenliste

- 1: Ventilschieber
- 2: Sitzventilkörper
- 3: Druckmittelverbraucher
- 4: Druckmittelquelle
- 5: Druckmittelsammler
- 6: Erster Drosselquerschnitt
- 6': Steuerkante
- 6": Steuerkante
- 7: Ventilgehäuse
- 8: Zweiter Drosselquerschnitt
- 8': Steuerkante
- 8": Steuerkante
- 9: Federelement
- 10: Anschlag
- 11: Proportionalmagnet
- 12: Rückschlagmanschette
- 13: Hülse
- 14: Ringnut
- 15: Feder
- 16: Magnetantrieb

## Patentansprüche

1. Mehrwegeventil für hydraulische Kraftfahrzeugbremsanlagen mit Radschlupfregelung und/oder automatischem Bremseneingriff, mit einem in einem Ventilgehäuse (7) axial beweglich angeordneten Sitzventilkörper (2) sowie mit einem im Ventilgehäuse (7) beweglichen Ventilschieber (1), wobei der Ventilschieber (1) einen oder mehrere radbremsseitige Druckmittelverbraucher (3) wahlweise mit einer als Bremsdruckgeber ausgebildeten Druckmittelquelle (4) oder mit einem als Niederdruckbehälter ausgeführten Druckmittelsammler (5) verbindet und wobei der Ventilschieber (1) mit dem Sitzventilkörper (2) mechanisch gekoppelt ist und als Hohlschieber ausgebildet ist, der relativ beweglich zum Sitzventilkörper (2) im Ventilgehäuse (7) angeordnet ist, **dadurch gekennzeichnet, daß** der Ventilschieber (1) von einem den Sitzventilkörper (2) aufnehmenden Stößel koaxial durchdrungen ist, der am Sitzventilkörper (2) einen Anschlag (10) aufweist, an dem der Ventilschieber (1) unter Wirkung eines Federelementes (9) anliegt, und daß der Sitzventilkörper (2) ein einstückiges Bestandteil des Stößels ist.

2. Mehrwegeventil nach Anspruch 1, **dadurch gekennzeichnet, daß** der Ventilschieber (1) in seiner Grundstellung den Druckmittelverbraucher (3) mit der Druckmittelquelle (4) verbindet, hingegen der Sitzventilkörper (2) in seiner Grundstellung den Druckmittelsammler (5) vom Druckmittelverbraucher (3) als auch von der Druckmittelquelle (4) trennt.

3. Mehrwegeventil nach Anspruch 1 oder 2, **dadurch gekennzeichnet, daß** der Ventilschieber (1) in seiner Druckmittelregelstellung druckausgeglichen ist.

4. Mehrwegeventil nach einem der vorhergehenden Ansprüche, **dadurch gekennzeichnet, daß** ein erster Drosselquerschnitt (6) in der hydraulischen Verbindung zwischen der Druckmittelquelle (4) und dem Druckmittelverbraucher (3) angeordnet ist, der durch eine erste Steuerkante (6') am Ventilschieber (1) und durch eine erste Steuerkante (6") im Ventilgehäuse (7) begrenzt ist.

5. Mehrwegeventil nach einem der vorhergehenden Ansprüche, **dadurch gekennzeichnet, daß** ein zweiter Drosselquerschnitt (8) in der hydraulischen Verbindung zwischen dem Druckmittelverbraucher (3) und dem Druckmittelsammler (5) vorgesehen ist, der abhängig von der Freigabe der hydraulischen Verbindung zwischen Druckmittelverbraucher (3) und Druckmittelsammler (5) bei translatorischer Bewegung des Ventilschiebers (1) sich mit seiner Steuerkante (8') gegenüber einer weiteren Steuerkante (8") im Ventilgehäuse (7) vom Sitzventilkörper (2) entfernt.

6. Mehrwegeventil nach einem der vorhergehenden Ansprüche, **dadurch gekennzeichnet, daß** in der Druckmittelregelstellung des Ventilschiebers (1) eine Spaltabdichtung zwischen der Druckmittelquelle (4) und dem Druckmittelsammler (5) besteht, wobei die Spaltabdichtung durch das Radialspiel zwischen Ventilschieber (1) und Ventilgehäuse (7) gebildet ist.

7. Mehrwegeventil nach Anspruch 1, **dadurch gekennzeichnet, daß** der Ventilschieber (1) von dem Federelement (9) und indirekt von einer Feder (15) beaufschlagt ist, das den Ventilschieber (1) in der die Druckmittelverbindung zwischen der Druckmittelquelle (4) und dem Druckmittelverbraucher (3) herstellenden Grundstellung positioniert, in der die hydraulische Verbindung über einen zweiten Drosselquerschnitt (8) zwischen dem Druckmittelsammler (5) und dem Druckmittelverbraucher (3) gesperrt und der erste Drosselquerschnitt (6) maximal geöffnet ist.

8. Mehrwegeventil nach Anspruch 1, **dadurch gekennzeichnet, daß** der Ventilschieber (1) in der Grundstellung an dem Anschlag (10) des Sitzventilkörpers (2) anliegt.

9. Mehrwegeventil nach Anspruch 7, **dadurch gekennzeichnet, daß** sich der Sitzventilkörper (2) in einer Reihenschaltung zum zweiten Drosselquerschnitt (8) in der hydraulischen Verbindung zwischen dem Druckmittelsammler (5) und dem Druckmittelverbraucher (3) befindet, wobei der Querschnitt des Sitzventilkörpers (2) vor dem Querschnitt des Ventilschiebers (1) geöffnet wird und kleiner ist.

10. Mehrwegeventil nach einem der vorhergehenden Ansprüche, **dadurch gekennzeichnet, daß** die Position des Ventilschiebers (1) mittels eines elektromechanischen, vorzugsweise stetig ansteuerbaren Antriebs, insbesondere durch einen Proportionalmagneten (11) veränderbar ist.

11. Mehrwegeventil für hydraulische Kraftfahrzeugbremsanlagen mit Radschlupfregelung nach einem der vorhergehenden Ansprüche 1-10, mit einem zur Lageposition des Ventilschiebers (1) vorgesehenen Magnetantrieb, **dadurch gekennzeichnet, daß** zur analogen Betätigung des Ventilschiebers (1) der Magnetantrieb (16) einer progressiven Kennlinie folgt, und daß der Magnetantrieb (16) mit einer progressiven Feder (15) zusammenwirkt.

## Claims

1. Multidirectional valve for hydraulic brake systems of automotive vehicles with wheel slip control and/or automatic braking intervention, which includes a seat valve member (2) disposed axially movably within a valve housing (7) as well as a valve slide (1) movable within the valve housing (7), with the valve slide (1) connecting one or a plurality of wheel-brake-side pressure medium consumers (3) alternatively to a pressure medium source (4) designed as braking pressure generator or to a pressure medium collector (5) constructed as low-pressure reservoir, and wherein the valve slide (1) is mechanically coupled with the seat valve member (2) and designed as a hollow slide disposed movably relative to the seat valve member (2) within the valve housing (7),
**characterized in that** the valve slide (1) is penetrated coaxially by a tappet which receives the seat valve member (2) and which, on the seat valve member (2), includes a stop (10) abutted by the valve slide (1) under the action of a spring element (9), and **in that** the seat valve member (2) is a one-piece component of the tappet.

2. Multidirectional valve as claimed in claim 1,
**characterized in that**, in its basic position, the valve slide (1) connects the pressure medium consumer (3) with the pressure medium source (4) whereas the seat valve member (2), in its basic position, separates the pressure medium collector (5) from the pressure medium consumer (3) as well as from the pressure medium source (4).

3. Multidirectional valve as claimed in claim 1 or claim 2,
**characterized in that** the valve slide (1) is pressure-balanced in its pressure-medium control position.

4. Multidirectional valve as claimed in anyone of the preceding claims,
**characterized in that** a first throttle cross-section (6) is disposed in the hydraulic connection between the pressure medium source (4) and the pressure medium consumer (3), which throttle cross-section is confined by a first control edge (6') on the valve slide (1) and by a first control edge (6") in the valve housing (7).

5. Multidirectional valve as claimed in anyone of the preceding claims,
**characterized in that**, in the hydraulic connection between the pressure medium consumer (3) and the pressure medium collector (5), a second throttle cross-section (8) is provided which, in dependence on the release of hydraulic connection between the pressure medium consumer (3) and the pressure medium collector (5), moves with its control edge (8') relative to another control edge (8") in the valve housing (7) away from the seat valve member (2) in case of a translational motion of the valve slide (1).

6. Multidirectional valve as claimed in anyone of the preceding claims,
**characterized in that**, in the pressure-medium control position of the valve slide (1), there exists a clearance sealing between the pressure medium source (4) and the pressure medium collector (5), with the clearance sealing being formed by the radial play between valve slide (1) and valve housing (7).

7. Multidirectional valve as claimed in claim 1,
**characterized in that** the valve slide (1) is acted upon by the spring element (9) and, indirectly, by a spring (15), which spring element positions the valve slide (1) in the basic position that establishes a pressure medium connection between the pressure medium source (4) and the pressure medium consumer (3), in which basic position the hydraulic connection through a second throttle cross-section (8) between the pressure medium collector (5) and the pressure medium consumer (3) is closed and the first throttle cross-section (6) is open to its maximum.

8. Multidirectional valve as claimed in claim 1,
**characterized in that**, in the basic position, the valve slide (1) abuts the stop (10) of the seat valve member (2).

9. Multidirectional valve as claimed in claim 7,
**characterized in that** the seat valve member (2) is serially connected to the second throttle cross-section (8) in the hydraulic connection between the pressure medium collector (5) and the pressure medium consumer (3), with the cross-section of the seat valve member (2) being opened prior to the cross-section of the valve slide (1) and being smaller.

10. Multidirectional valve as claimed in anyone of the preceding claims,
**characterized in that** the position of the valve slide (1) can be changed by means of an electromechanical drive, preferably actuatable in a steady manner, in particular by a proportional magnet (11).

11. Multidirectional valve for hydraulic brake systems of automotive vehicles with wheel slip control as claimed in anyone of the preceding claims 1 through 10,
which includes a magnet drive provided for positioning the valve slide (1),
**characterized in that**, for analog actuation of the valve slide (1), the magnet drive (16) follows a progressive characteristic line and **in that** the magnet drive (16) cooperates with a progressive spring (15).

## Revendications

1. Soupape multivoie pour une installation de freinage hydraulique de véhicule automobile avec régulation du glissement de roue et/ou action automatique de freinage, comportant un corps de soupape à siège (2) disposé de manière à être mobile axialement dans un boîtier de soupape (7), ainsi qu'un tiroir de soupape (1) déplaçable dans le boîtier de soupape (7), dans lequel le tiroir de soupape (1) relie un ou plusieurs appareils (3) d'utilisation de fluide sous pression, du côté des freins de roues, au choix à une source de fluide sous pression (4) agencée sous la forme d'un générateur de pression de frein, ou un collecteur (5) de fluide sous pression, réalisé sous la forme d'un récepteur à basse pression, et dans lequel le tiroir de soupape (1) est couplé mécaniquement au corps de soupape à siège (2) et est agencé sous la forme d'un tiroir de soupape creux et est disposé de manière à être mobile par rapport au corps de siège de soupape (2) dans le boîtier de soupape (7), **caractérisée en ce que** le tiroir de soupape (1) est traversé coaxialement par un poussoir qui est porté par le corps de soupape à siège (2) et qui possède sur le corps de soupape à siège (2) une butée (10), contre laquelle le tiroir de soupape (1) s'applique sous l'action d'un élément de ressort (9), et que le corps de siège de soupape (2) est un composant monobloc du poussoir.

2. Soupape multivoie **caractérisée en ce que** dans sa position de base, le tiroir de soupape (1) relie l'appareil (3) d'utilisation de fluide sous pression à la source de fluide sous pression (4), tandis que dans sa position de base, le corps de soupape à siège (2) sépare le collecteur (5) du fluide sous pression vis-à-vis de l'appareil d'utilisation de fluide sous pression (3) et également de la source de fluide sous pression (4).

3. Soupape multivoie selon la revendication 1 ou 2, **caractérisée en ce que** le tiroir de soupape (1) est compensé en pression dans sa position de régulation du fluide sous pression.

4. Soupape multivoie selon l'une des revendications précédentes, **caractérisée en ce qu'**une première section transversale d'étranglement (6) est disposée dans la liaison hydraulique entre la source de fluide sous pression (4) et l'appareil (3) d'utilisation de fluide sous pression, qui est limitée par une première arête de commande (6') située sur le tiroir de soupape (1) et par une première arête de commande (6") présente sur le boîtier de soupape (7).

5. Soupape multivoie selon l'une des revendications précédentes, **caractérisée en ce qu'**il est prévu une seconde section transversale d'étranglement (8) dans la liaison hydraulique entre l'appareil (3) d'utilisation du fluide sous pression et le collecteur (5) de fluide sous pression, qui en fonction de la libération de la liaison hydraulique entre l'appareil (3) d'utilisation de fluide sous pression et le collecteur (5) de fluide sous pression, lors d'un mouvement de translation du tiroir de soupape (6), s'écarte par son arête de commande (8') du corps de soupape à siège (2) par rapport à une autre arête de commande (8") dans le boîtier de soupape (7).

6. Soupape multivoie selon l'une des revendications précédentes, **caractérisée en ce que** dans la position de régulation du fluide sous pression du tiroir de soupape (1), un système d'étanchéité de fente est présent entre la source (4) du fluide sous pression et le collecteur (5) du fluide sous pression, le système d'étanchéité à labyrinthe étant formé par le jeu radial entre le tiroir de soupape (1) et le boîtier de soupape (7).

7. Soupape multivoie selon la revendication 1, **caractérisée en ce que** le tiroir de soupape (1) est chargé par l'élément de ressort (9) et indirectement un ressort (15), qui positionne le tiroir de soupape (1) dans la position de base qui établit la liaison de fluide sous pression entre la source (4) de fluide sous pression et l'appareil (3) d'utilisation du fluide sous pression, position dans laquelle la liaison hydraulique est bloquée par une seconde section transversale d'étranglement (8) entre le collecteur (5) du fluide sous pression et l'appareil (3) d'utilisation du fluide sous pression, et la première section transversale d'étranglement (6) est ouverte au maximum.

8. Soupape multivoie selon la revendication 1, **caractérisée en ce que** le tiroir de soupape (1) s'applique, dans la position de base, contre la butée (10) du corps de soupape à siège (2).

9. Soupape multivoie selon la revendication 7, **caractérisée en ce que** le corps de soupape à siège (2) est situé dans un circuit série avec la seconde section transversale d'étranglement (8) dans la liaison hydraulique entre le collecteur (5) de fluide sous pression et l'appareil (3) d'utilisation du fluide sous pression, la section transversale du corps de soupape à siège (2) étant ouverte en amont de la section transversale du tiroir de soupape (1) et étant plus petite.

10. Soupape multivoie selon l'une des revendications précédentes, **caractérisée en ce que** la position du tiroir de soupape (1) peut être modifiée à l'aide d'un dispositif d'entraînement électromécanique, de préférence commandable de façon continue, notamment par un aimant à action proportionnelle (11).

11. Soupape multivoie pour des installations hydrauliques de freinage de véhicules automobiles comportant une régulation du glissement de roue selon l'une des revendications précédentes 1 à 10, comportant un dispositif d'entraînement magnétique (16) prévu pour la position du tiroir de soupape, **caractérisée en ce que** pour l'actionnement analogique du tiroir de soupape (1), le dispositif d'entraînement magnétique (16) suit une courbe caractéristique progressive et que le dispositif d'entraînement magnétique (16) coopère avec un ressort
